# EUROPEAN PATENT APPLICATION

(11) **EP 4 560 878 A1**
(43) Date of publication of application: **28.05.2025**
(21) Application number: 23211380.3
(22) Date of filing: 22.11.2023
(51) Int. Cl.: H02J 50/12, H02J 50/80, H04B 5/79

(54) **WIRELESS POWER TRANSFER**

(71) Applicant: Koninklijke Philips N.V., 5656 AG Eindhoven (NL)
(72) Inventor: AGAFONOV, Aleksei, 5656 AG Eindhoven (NL); STARING, Antonius Adriaan Maria, 5656 AG Eindhoven (NL)
(74) Representative: Philips Intellectual Property & Standards

(57) **Abstract**

A power receiver (105) wirelessly receives power from a power transmitter (101) via an electromagnetic power transfer signal. The power transmitter (101) may frequency or phase modulate the power transfer signal using a pattern of data values for each data symbol with each data value being represented by a constant modulation levels in a modulation time interval. The data values may be detected by the power receiver communicator (509) of the power receiver (105) in dependence on a difference in frequency and/or phase for consecutive modulation time intervals. The data transmission may use frequency or phase shift keying whereas demodulation/detection is based on differential frequency/phase detections. This may provide improved and facilitated transmission of data from the power transmitter to the power receiver.

## Description

### FIELD OF THE INVENTION

The invention relates to wireless power transfer and in particular, but not exclusively, to communication in a power transfer system, such as a wireless power transfer system operating in accordance with elements of the Qi wireless power transfer Specification.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain). Based on the Qi Specification, an approach known as the Ki specification is being developed for high power applications, such as specifically for Kitchen appliances.

In order to support efficient wireless power transfer, wireless power transfer systems utilize substantial communication between the power transmitter and the power receiver.

Communication in some wireless power transfer systems, such as Qi systems, use frequency modulation of the power transfer signal to communicate data from the power transmitter to the power receiver. However, although such conventional approaches may provide efficient communication in many scenarios, it tends to not be optimum or ideal in all practical implementations and situations. For example, it may in many situations have less than ideal communication performance with respect to e.g. communication capacity and/or reliability. It may often also require substantial complexity and functionality which may increase cost. Conventional communication approaches may result in a sub-optimal user experience and/or power transfer in many practical scenarios.

Hence, an improved approach would be advantageous, in particular, an approach allowing increased flexibility, reduced cost, reduced complexity, improved power transfer operation, increased reliability, reduced communication errors, improved backwards compatibility, improved communication from a power transmitter to a power receiver, improved and/or facilitated demodulation of a modulated power transfer signal, improved efficiency, reduced, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power receiver for wirelessly receiving power from a power transmitter via an electromagnetic power transfer signal, the power receiver comprising: an input circuit comprising a receiver coil arranged to extract power from the power transfer signal to generate an induced power signal; a power receiver controller arranged to control an operation of the power receiver in dependence on data received from the power transmitter; a communicator arranged to receive data symbols transmitted from the power transmitter, each data symbol having a data symbol value and being modulated on to the power transfer signal using a modulation scheme where each (possible) data symbol value is linked to a different predetermined chip sequence of one or more binary chip values, each binary chip value being represented by a constant modulation level in a chip time interval, each constant modulation level being at least one of a constant frequency of the power transfer signal and a constant phase of the power transfer signal, the constant modulation levels being unchanged between some consecutive chip time intervals; wherein the communicator is arranged to: for each chip time interval of at least some chip time intervals determine a difference between a measured modulation level for the chip time interval and a measured modulation level for an immediately preceding chip time interval, and to determine a received binary chip value for the chip time interval from the difference; and to determine data symbol values by comparing received chip sequences formed by received binary chip values to the different predetermined chip sequences.

The invention may allow improved performance in many embodiments and may in particular in many embodiments allow improved communication between a power transmitter and a power receiver. It may allow improved power transfer in many embodiments. The approach may allow frequency and/or phase shift keying to be demodulated using a differential approach. This may in many scenarios provided improved demodulation and/or reduced complexity. For example, it may obviate or remote the requirement for the power receiver to determine an accurate frequency/phase reference.

Each data value of a set of data values may be linked to a different predetermined chip sequence/pattern of a set of predetermined chip sequence/patterns of constant modulation levels. Each constant modulation level may be constant for a modulation time interval. Each pattern! predetermined chip sequence of the set of patterns/ predetermined chip sequences may comprise one or more modulation/chip time intervals, and thus may comprise one or more constant modulation level time intervals.

The communicator is arranged to determine the data symbol value for a given data symbol as a data symbol value linked to a predetermined chip sequence/pattern of the different predetermined chip sequence/patterns most closely matching a received chip sequence/pattern for the given data symbol.

The constant modulation levels may be unchanged between some consecutive modulation/chip time intervals of at least some predetermined chip sequences/patterns of the different predetermined chip sequence/patterns (when the different predetermined chip sequence/patterns comprise more than one modulation/chip time interval) or may be unchanged between some consecutive modulation/chip time intervals of different predetermined chip sequences/patterns/data symbols (such as e.g. when each predetermined chip sequence/pattern comprises only a single modulation/chip time interval).

The operation of the power receiver may be a power transfer operation. The power receiver controller may be arranged to extract power from the power transfer signal in dependence on the data symbol values.

Each constant modulation level may be a constant modulation level of a set of a number of constant modulation levels. The number of constant modulation levels may in some embodiments be 2, 3, or 4. The number of constant modulation levels may in many embodiments not exceed 4, 8, or 16.

In accordance with an optional feature of the invention, the different predetermined chip sequences comprise only one binary chip value.

This may provide improved performance and/or operation of a power transfer system. It may in many scenarios allow for a higher data rate while still allowing efficient, low complexity and/or reliable communication.

In accordance with an optional feature of the invention, the different predetermined chip sequences comprise no less than four binary chip values.

This may provide improved performance and/or operation of a power transfer system. It may in particular in many embodiments allow a lower modulation depth, such as a lower frequency variation, while still providing a reliable communication and low data rate. A lower modulation depth, and in particular lower frequency variation, may allow improved power transfer with less fluctuations/noise.

Each modulation time interval may correspond to a chip of a spread spectrum chip sequence. The communication may use a direct sequence spread spectrum approach using a chip sequence having no less than four chips. Each modulation time interval may be a chip time interval of a chip sequence. Each data symbol may be represented by a different chip sequence.

In accordance with an optional feature of the invention, the modulation scheme includes a start time interval preceding chip time intervals for a predetermined chip sequence (of the different predetermined chip sequences) for a data symbol; and wherein the communicator is arranged to determine the previously measured modulation level for an initial chip time interval of the predetermined chip sequence for the data symbol as a modulation level measured for the start time interval.

This may provide improved performance and/or operation of a power transfer system. It may in particular allow improved communication and receipt of initial data values, and thus may provide improved overall communication including typically a reduced data rate.

In accordance with an optional feature of the invention, a constant modulation level for the start time interval is constrained to have a different value than a constant modulation level for the initial chip time interval.

This may provide improved performance and/or operation of a power transfer system. It may in particular allow an improved and/or facilitated communication of data from the power transmitter to the power receiver.

In accordance with an optional feature of the invention, the different predetermined chip sequences are arranged to have a longest sequence of consecutive chip time intervals with the same binary chip value to immediately follow the start time interval.

This may provide improved performance and/or operation of a power transfer system. It may in particular allow an improved and/or facilitated communication of data from the power transmitter to the power receiver.

In accordance with an optional feature of the invention, the modulation scheme includes a plurality of constant modulation levels being linked to at least a first binary chip value and wherein the first binary chip value is changed from being represented by a first constant modulation level of the plurality of constant modulation levels to being represented by a second constant modulation level of the plurality of constant modulation levels in response to a number of consecutive chip time intervals having the first constant modulation level exceeding a threshold.

This may provide improved performance and/or operation of a power transfer system. It may in particular allow an improved differential detection. The threshold may in many embodiments be an integer number in the range of 2 to 15, and often may be 2, 3, or 4.

In accordance with an optional feature of the invention, a difference between the first constant modulation level and a constant modulation level linked with a different binary chip value than the first binary chip value is smaller than a difference between the second constant modulation level and the constant modulation level linked with the different binary chip value.

This may provide improved and/or facilitated communication of data from the power transmitter to the power receiver.

In accordance with an aspect of the invention, there is provided a power transfer system comprising a power transmitter providing power to the power receiver of any previous claim, the power transmitter comprising: an output circuit comprising a transmitter coil arranged to generate the power transfer signal in response to a drive signal being applied to the output circuit; a driver arranged to generate the drive signal; a first communicator arranged to transmit data to the power receiver by modulating the power transfer signal using the modulation scheme where each data symbol value is represented by a different predetermined chip sequence of at least one binary chip value, each binary chip value being represented by a constant modulation level in a chip time interval, each constant modulation level being at least one of a constant frequency and a constant phase of the power transfer signal during the chip time interval, the constant modulation levels being unchanged between some consecutive chip time intervals.

This may provide improved performance and/or operation of a power transfer system. It may in particular allow an improved and/or facilitated communication of data from the power transmitter to the power receiver.

In accordance with an optional feature of the invention, each constant modulation level is a constant frequency, and the first communicator is arranged to transmit data to the power receiver during communication time intervals, and to apply a frequency variation to the power transfer signal during time intervals between the communication time intervals.

This may provide improved performance and/or operation of a power transfer system. It may in particular allow an improved and/or facilitated communication of data from the power transmitter to the power receiver.

In accordance with an optional feature of the invention, the first communicator is arranged to apply a frequency variation having a correlation with each frequency pattern of the different predetermined chip sequences which is less than a correlation between any constant frequency and each frequency pattern of the different predetermined chip sequences.

This may provide improved performance and/or operation of a power transfer system. It may in particular allow an improved and/or facilitated communication of data from the power transmitter to the power receiver.

In accordance with another aspect of the invention, there is provided a method of operation for a power receiver wirelessly receiving power from a power transmitter via an electromagnetic power transfer signal, the power receiver comprising: an input circuit comprising a receiver coil extracting power from the power transfer signal to generate an induced power signal; a power receiver controller arranged to control an operation of the power receiver in dependence on data received from the power transmitter; a communicator arranged to receive data symbols transmitted from the power transmitter, each data symbol having a data symbol value and being modulated on to the power transfer signal using a modulation scheme where each (possible) data symbol value is linked to a different predetermined chip sequence of one or more binary chip values, each binary chip value being represented by a constant modulation level in a chip time interval, each constant modulation level being at least one of a constant frequency of the power transfer signal and a constant phase of the power transfer signal, the constant modulation levels being unchanged between some consecutive chip time intervals; wherein the method comprises the communicator performing the steps of: for each chip time interval of at least some chip time intervals determining a difference between a measured modulation level for the chip time interval and a measured modulation level for an immediately preceding chip time interval, and determining a received binary chip value for the chip time interval from the difference; and determining data symbol values by comparing received chip sequences formed by received binary chip values to the different predetermined chip sequences.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of a half bridge inverter for a power transmitter;
FIG. 4 illustrates an example of a full bridge inverter for a power transmitter;
FIG. 5 illustrates an example of elements of a power receiver in accordance with some embodiments of the invention;
FIG. 6 illustrates an example of chip sequences;
FIG. 7 illustrates an example of frequency variations in a wireless power transfer system;
FIG. 8 illustrates an example of signals in a wireless power transfer system comprising a power receiver and power transmitter in accordance with some embodiments of the invention; and
FIG. 9 illustrates an example of detection correlations for communication in a wireless power transfer system comprising a power receiver and power transmitter in accordance with some embodiments of the invention.

### DETAILED DESCRIPTION OF THE EMBODIMENTS

The following description focuses on embodiments of the invention applicable to a high power wireless power transfer system utilizing a power transfer approach such as known from the Qi Specification. However, it will be appreciated that the invention is not limited to this application but may be applied to many other wireless power transfer systems.

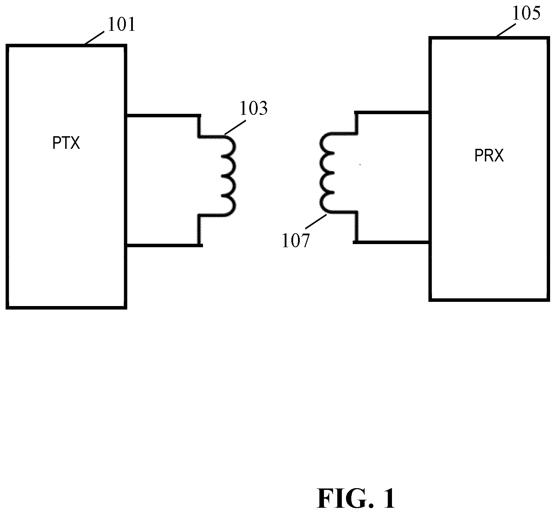

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and in many practical systems may be around 120-150 kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

In the following, the operation of the power transmitter 101 and the power receiver 105 will be described with specific reference to an embodiment generally in accordance with the Qi or Ki Specifications (except for the herein described (or consequential) modifications and enhancements). Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal to the power control function in the power transmitter to reduce the static error, ideally to zero.

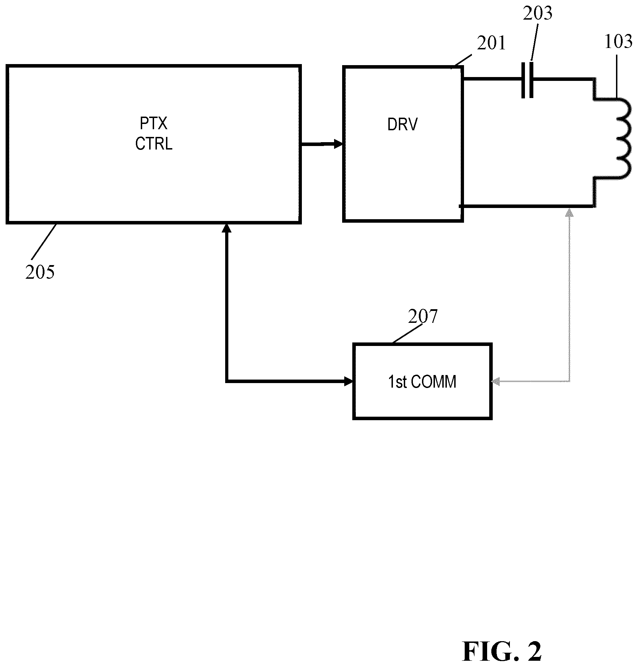

FIG. 2 illustrates elements of the power transmitter 101 of FIG. 1 in more detail.

The power transmitter 101 includes a driver 201 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 203. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

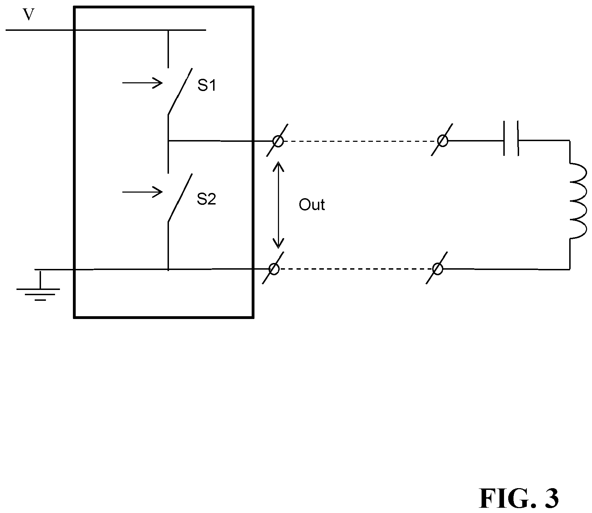

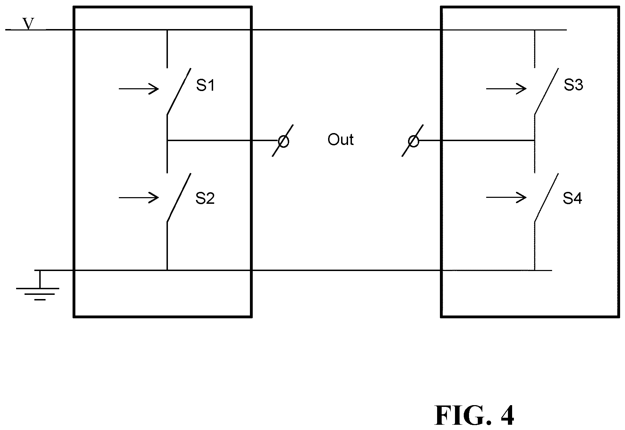

The driver 201 generates the current and voltage which is fed to the output resonance circuit and thus to the transmitter coil 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 205 which is arranged to control the operation of the power transmitter 101 in accordance with the desired operating principles. Specifically, the power transmitter 101 may include many of the functionalities required to perform power control in accordance with the Qi or Ki Specification.

The power transmitter controller 205 is in particular arranged to control the generation of the drive signal by the driver 201, and it can specifically control the power level of the drive signal, and accordingly the level of the generated power transfer signal. The power transmitter controller 205 comprises a power loop controller controlling a power level of the power transfer signal in response to the power control messages received from the power receiver 105 during the power transfer phase.

In order to communicate with the power receiver the power transmitter 101 further comprises a power transmitter communicator 207 which is arranged to communicate with a complementary communicator of a power receiver. The power transmitter communicator 207 is specifically arranged to communicate with the (complementary communicator of the) power receiver using the power transfer signal as a communication carrier. For example, a range of different messages such as those specified in the Qi Specifications may be exchanged. Messages may comprise one or more data bits/ symbols.

In the direction from the power receiver to the power transmitter, the power receiver may load modulate the power transfer signal to communicate data to the power transmitter. As will be well known to the skilled person, for load modulation, a loading change of the power transfer signal by the power receiver can be detected by the power transmitter communicator 207 and the power receiver may change the loading in accordance with data values to be transmitted.

In the direction from the power transmitter to the power receiver, the communication is in the described approach by frequency and/or phase modulation of the power transfer signal. The power transmitter communicator 207 may specifically apply a frequency and/or phase shift keying where the power transmitter communicator 207 controls the power transmitter controller 205 and driver 201 to apply a particular pattern of frequencies and/or phases dependent on the data symbol that is to be transmitted. Such patterns may thus correspond to predetermined chip sequences. The power receiver may evaluate the signal induced in the receiver coil 107 (from the power transfer signal) and demodulate this according to the modulation used thereby extracting data transmitted in the forward direction (from power transmitter to power receiver). Specifically, the communicator of the power receiver may measure the frequencies/phases and detect the transmitted data symbol by comparing the received frequency/phase pattern/chip sequence to the predetermined patterns/chip sequences for the different data symbol values.

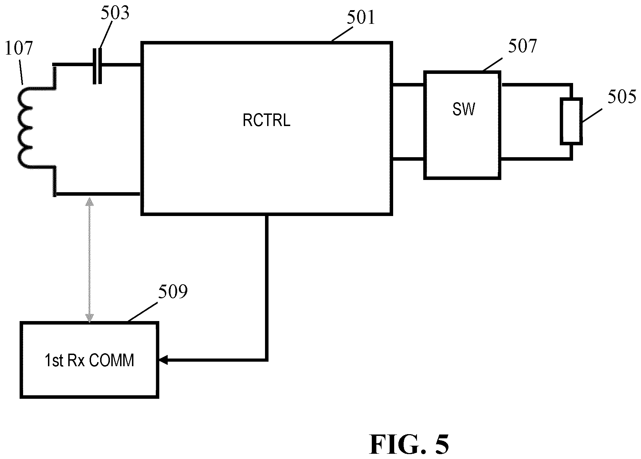

FIG. 5 illustrates some exemplary elements of the power receiver 105.

In the example, the receiver coil 107 is coupled to a power receiver controller 501 via a capacitor 503 which together with the receiver coil 107 forms an input resonance circuit. Thus, the power transfer may be a resonant power transfer between resonance circuits. In other embodiments, only one, or none, of the power receiver and the power transmitter may utilize a resonance circuit for power transfer.

The power receiver controller 501 couples the receiver coil 107 to a load 505 via a switch 507. The power receiver controller 501 includes a power control path which converts the power extracted by the receiver coil 107 into a suitable supply for the load 505. In some embodiments, the power receiver controller 501 may provide a direct power path which simply connects the input resonance circuit to the switch 507 or load 505, i.e. the power path of the power receiver controller 501 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 507 may only be present in some embodiments and that in some embodiments the load 505 may permanently be coupled to the input resonance circuit.

The load 505 represents the target load for the power transfer. The load 505 may for example be an external device, a battery or charging function, etc. The load 505 may also represent the loading by internal circuitry, such as control, support, and auxiliary circuits supporting the power transfer.

In addition, the power receiver controller 501 may include various power receiver controller functionality required to perform power transfer, and in particular functions required to perform power transfer in accordance with the Qi Specifications.

The power transmitter further comprises a power receiver communicator 509 which is arranged to communicate with the power transmitter to exchange data messages. The power receiver communicator 509 is the complementary communicator to the power transmitter communicator 207 and is specifically arranged to transmit data to the power transmitter by load modulating the power transfer signal. For example, the power receiver communicator 509 may be arranged to switch in/out a communication capacitor e.g. positioned in parallel with the power receiver controller 501 or with the resonance capacitor 503 thereby being able to vary the resonance frequency and the loading of the power transfer signal.

Further, the power receiver communicator 509 is arranged to receive the data from the power transmitter which has been phase and/or frequency modulated onto the power transfer signal. The power receiver communicator 509 may specifically as previously mentioned measure/determine the phase and/or frequency of the power transfer signal during a given time interval and proceed to determine the received data from these measurements. The power receiver communicator 509 may proceed to use a novel differential approach as will be described in more detail later.

The power receiver communicator 509 may be coupled to the power receiver controller 501 and be arranged to provide received data to the power receiver controller 501 for processing, and to receive data from the power receiver controller 501 for transmission to the power transmitter. For example, the power receiver communicator 509 may receive power error control data from the power receiver controller 501 and may transmit corresponding power error control messages to the power transmitter using load modulation. In general, it is appreciated that many different functions and operations of the power receiver (and the power transmitter) may be dependent on data received from the complementary entity. In particular, the power transfer operation is typically dependent on the data being received from the complementary device.

For example, during power transfer, the system is arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

At regular, and typically frequent, intervals, the power receiver transmits a power control error message to the power transmitter. In some embodiments, a direct power setpoint change message may be transmitted indicating a desired absolute power level (rather than a relative error message). The power receiver 105 comprises functionality for supporting such a power control loop, e.g. the power receiver controller 501 may continuously monitor the power or voltage of a load signal provided to the load and detect whether this is above or below a desired value. It may at regular intervals generate a power control error message which requests that the power level of the power transfer signal is increased or decreased, and it may transmit this power control error message to the power transmitter. Such error control messages, as well as other messages, may be transmitted by load modulation.

As another example, the power transmitter may transmit various command and configuration data to the power receiver. For example, parameters of the power transfer may be established or negotiated during a power transfer initialization phase. Such an operation may typically include data being communicated in both directions.

The power transmitter communicator 207 and the power receiver communicator 509 are arranged to communicate in the direction from the power transmitter to the power receiver by modulating the phase and/or frequency of the power transfer signal. Specifically, the system may use a specific modulation and demodulation approach which will be described in the following.

The communication approach may specifically be a Frequency Shift Keying (FSK) or Phase Shift Keying (PSK). At the same time, the power receiver communicator 509 may demodulate the signal using a differential demodulation approach that can provide improved performance in many scenarios. The following description will focus on frequency modulation, and specifically on the power transmitter using FSK, but it will be appreciated that the described approaches and principles will apply equally (mutatis mutandis) to phase modulation, and in particular to PSK.

In the used modulation scheme, each data symbol is represented by modulation in one or more modulation/chip time intervals with the modulation level being constant in each modulation/chip time interval, i.e. each data symbol is represented by a number of modulation/chip time intervals in which the frequency and/or phase of the power transfer signal is constant. In each modulation/chip time interval, the modulation level is constant but it may change between the modulation/chip time intervals. Each constant modulation level may take on one of a set of predetermined levels, such as one of a set of predetermined frequencies and/or phases. Each of the modulation/chip time intervals accordingly corresponds to/provide a given constant modulation level. Further, each constant modulation level is linked to a modulation/chip time interval data value which specifically is referred to as a binary chip value. Each modulation/chip time interval may represent a binary chip value with the data value being represented by different modulation levels (specifically frequencies). For example, a binary communication may be performed by a binary chip value of "0" being represented by a first frequency, such as say 100 kHz, and a binary chip value of "1" being represented by a second frequency, such as say 99 kHz (or e.g. by a phase value of +90° for a "1" and -90° for a "0").

Thus, each data symbol is modulated on to the power transfer signal by a pattern/predetermined chip sequence of one or more modulation/chip time intervals with each chip time interval having a constant modulation level, corresponding to a constant frequency and/or phase of the power transfer signal. Each possible data symbol value is linked to/represented by a different pattern/predetermined chip sequence of one or more constant modulation levels (with each constant modulation level being constant for the duration of a modulation/chip time interval). Thus, each data symbol may be represented by a sequence/pattern of one or more chip time intervals that each have a constant modulation level. Thus, each data symbol may be represented by a predetermined pattern/chip sequence of constant modulation levels. Henceforth, the modulation/chip time interval will be referred to as chip time intervals, but it will be appreciated that the term modulation time interval could be used as appropriate. Similarly, the data value of the modulation/chip time intervals will be referred to as chip values and the predetermined patterns/chip sequences will be referred to as predetermined chip sequences only.

In some embodiments, each data symbol may be represented by only a single chip time interval. Thus, in such a case, the data symbol value may simply be the binary chip value for the chip time interval, and e.g. the data symbol value of "0" is represented by the single chip time interval having a frequency of e.g. 100 kHz and a data symbol value of "1" by the single chip time interval having a frequency of e.g. 99 kHz. In the extreme situation, each pattern/predetermined chip sequence may include only a single chip time interval and with only two possible frequencies. Thus, in such an example, each pattern/predetermined chip sequence may correspond to a specific constant frequency.

In many embodiments and scenarios, each data symbol may be represented by a plurality of chip time intervals, and thus by a sequence/pattern of a plurality of binary chip values of the individual chip time intervals, and accordingly by a predetermined chip sequence of a plurality of constant modulation levels. Hence, in many embodiments, each data symbol may be represented by a predetermined chip sequence comprising a plurality of chip time intervals, such as in many cases no less than 4, 6, 8 10, or 16 chip time intervals. In such cases, each chip time interval may have a constant modulation level that represents a binary chip value for the chip time interval, i.e. each chip time interval has a binary chip value represented by the frequency or phase of the power transfer signal during the chip time interval.

Each data symbol value is accordingly linked to a predetermined chip sequence of a plurality of chip time interval binary chip values. Typically, the number of possible predetermined chip sequences is substantially larger than the number of data symbol values. For example, a predetermined chip sequence comprising 8 chip time intervals may be used to represent binary data symbol values, i.e. two predetermined chip sequences out of 256 possible predetermined chip sequences may be used to represent the two data symbol values. Typically, predetermined chip sequences with minimal cross-correlation are used to represent the different data symbol values.

Such an approach may correspond to a Direct Sequence Spread Spectrum, DSSS, modulation of the power transfer signal using a suitable chip sequence.

In the modulation scheme, the constant modulation levels may for at least some data symbol values or consecutive pairs of data symbol values be unchanged between consecutive data symbols.

For example, in situations where each data symbol is represented by only a single modulation/chip time interval, and thus only one constant modulation level is transmitted per data symbol, two or more consecutive data symbols may have the same data symbol value and thus be represented by the same constant modulation level. Accordingly, the consecutive communication time intervals of the different data symbols may have the same constant modulation level if one data symbol directly follows another. Specifically, the power transfer signal may have the same frequency during the consecutive data symbols and thus the same frequency is constant over multiple consecutive modulation/chip time intervals.

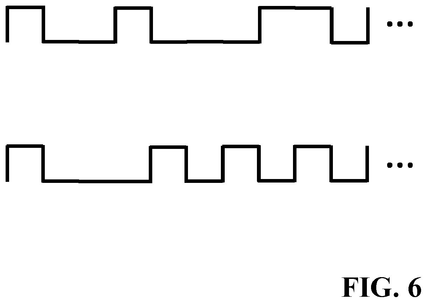

The same situation may occur in scenarios where each data symbol is represented by a predetermined chip sequence of a plurality of chip time intervals/ binary chip values. In such cases, the last chip time interval! binary chip value may be the same as the first chip time interval/ binary chip value of the next data symbol. Further, in most scenarios, at least one, and typically all, of the predetermined chip sequences include consecutive /chip time intervals that do not change or have different modulation levels. FIG. 6 illustrate an example of (part of) possible patterns/chip sequences for two data symbols. Such an approach may be thought of as a DSSS modulation being applied to the power transfer signal, i.e. a predetermined chip sequence of binary chip values (with each chip being one chip time interval) can be applied to the power transfer signal as an FSK or a PSK signal. The approach may specifically encode each data symbol value with a predetermined chip pattern/sequence having a very strong autocorrelation peak at zero offset and a low autocorrelation at all other offsets (such as a Barker code or M-sequence). Further, the chip patterns/sequences can be selected to have low cross-correlation. The approach provides for efficient detection of modulated signals even below the noise floor.

Thus, the power transmitter, and specifically the power transmitter communicator 207, is arranged to transmit data using an absolute FSK or PSK modulation. The transmission modulation is not differential and the constant modulation level during a chip time interval may be dependent only on the binary chip value of that chip time interval. The constant modulation level of a chip time interval may be independent of the constant modulation level of other chip time intervals. The binary chip value for a given chip time interval may be determined/given by the constant modulation level of only that chip time interval. It is typically not determined/given by a constant modulation level of any other chip time interval.

However, despite the transmission and modulation being an absolute and non-differential modulation, the power receiver is arranged to employ differential demodulation.

Specifically, the power receiver communicator 509 is arranged to determine a measured modulation level for each chip time interval. Further, for each (or at least some) chip time interval(s), it determines the difference between the measured modulation level for the given chip time interval and the modulation level that was measured in the immediately preceding chip time interval. The power receiver communicator 509 may then proceed to determine the binary chip value for the current chip time interval/chip depending on the difference between the measured level for the current chip time interval and the level that was measured for the previous chip time interval.

In many embodiments, the power receiver communicator 509 may specifically be arranged to determine the binary chip value for the chip time interval dependent on the sign of the difference. When using binary chip values and only two constant modulation levels, the binary chip value may be determined as the one matching a constant modulation level that is in the direction of change for the measured difference.

For example, for a binary FSK approach representing a first binary chip value (say a "0") by a first frequency (say 100 kHz) and a second binary chip value (say a "1") by a second lower frequency (say 99 kHz) the power receiver communicator 509 may be arranged to determine the binary chip value for a given (chip) binary chip value/chip time interval as the first binary chip value if the difference is indicative of an increased frequency and as the second binary chip value if the difference is indicative of a decreased frequency (i.e. as a "0" for a positive frequency difference and as a "1" for a negative frequency difference).

For embodiments in which each data symbol is represented by a single chip time interval pattern/predetermined chip sequence, the binary chip value for the chip time interval can be directly used for the data symbol value. In embodiments where each data symbol value is represented by pattern/predetermined chip sequences of a plurality of chip time intervals/chips, the received chip binary chip values can be combined to form a received pattern/predetermined chip sequence which can be compared to the stored pattern/predetermined chip sequences for the different data symbol values. Thus, the data symbol value may be determined as the value linked to the pattern/predetermined chip sequence most closely matching the received pattern/predetermined chip sequence. The match may be evaluated by correlating the received pattern/predetermined chip sequence with the stored pattern/predetermined chip sequences and selecting the one with the highest correlation value. The data symbol is then determined as the data symbol value linked to this pattern/predetermined chip sequence. The power receiver communicator 509 may be arranged to determine the data symbol value for a given data symbol as a data symbol value linked to a pattern/predetermined chip sequence of the different pattern/predetermined chip sequences most closely matching a received pattern/predetermined chip sequence for the given data symbol.

The system thus uses a non-homogenous approach where the power transmitter uses an absolute modulation scheme whereas the power receiver applies a differential demodulation approach.

The approach reflects the inventors' realization that it is a specific property of many wireless power transfer systems that the power transfer has a substantial built in inertia which may substantially slow down changes in the operating point of the power transfer. Indeed, the approach reflects the inventors' realization that in many wireless power transfer systems, such inertia applies not just to the power level/amplitude of the power transfer signal but also to the frequency and phase of the power transfer signal. Specifically, an instantaneous change in the drive frequency or phase of the drive signal generated by the driver 201 has been realized to not instantaneously result in a corresponding change in the induced signal generated at the power receiver. Rather, a relatively slow change in the frequency of the signal extracted at the power receiver is experienced.

In particular, wireless power transfer systems include significant reactive components that prevent instantaneous energy changes. Such gradual transitions not only happen in the amplitude/power domain but also in the frequency domain as well (as these domains are tightly connected).

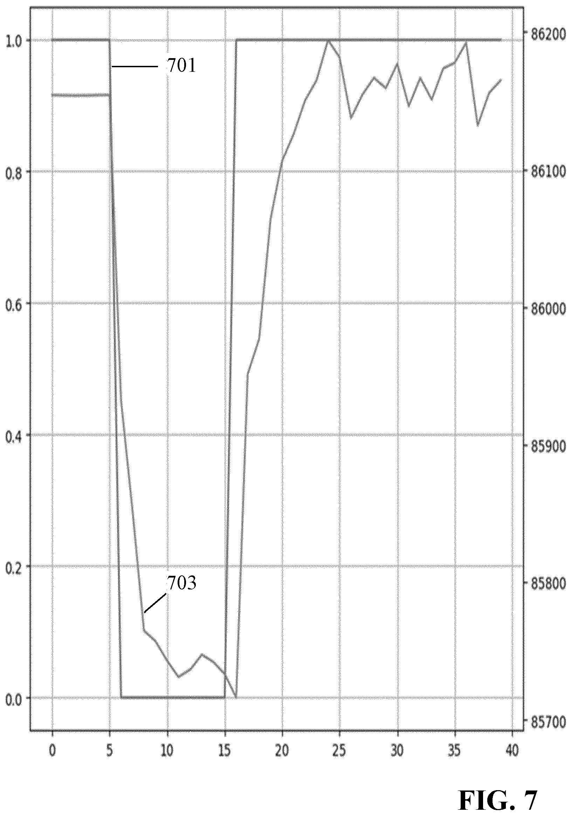

FIG. 7 illustrates an example of a simulated transition from one frequency to another in a wireless power system. The figure shows the frequency response of a frequency jump 701 vs. the modulation applied to the drive signal 703. The x-axis represents the number of cycles of a supply voltage for the driver 201 (typically a 100 or 120kHz rectified AC voltage). As can be seen, the transition is a rather lengthy process, with a frequency change being initiated on cycle #5, the observed frequency settles at roughly 5 cycles after the frequency change. The same occurs for a reverse transition being instigated on cycle #15.

This means that for at least several supply voltage cycles, while the modulation level/frequency is kept constant by the power transmitter, the observed chip time interval differential modulation will show the value indicating the particular transition and thus the absolute frequency value (e.g. if a negative slope in differential signal results in logical `1', the first few cycles after the `1' applied by the transmitter, the differential modulator on the power transmitter will recognize as '1').

The power receiver communicator 509 can determine the modulation level, and thus the binary chip value of the specific chip time interval, based on the difference to the previous chip time interval. Thus, the phenomenon of inertia in the wireless power transfer system allows the power transmitter to apply modulation in a conventional way, such as e.g. using one frequency f1 to encode a logical `1' binary chip value and another frequency f2 to encode a logical '0' binary chip value, while still allowing the power receiver to detect the binary chip values as if it were differential modulation, including when a sequence of constant binary chip values are encoded.

The approach may allow a number of advantages. In particular, differential decoding/ demodulation may often be lower complexity and allow a more accurate detection. It may in particular avoid the need for determining an absolute measured or reference frequency/phase in order to determine the chip data value (the chip binary chip value). Further, rather than using a fully differential modulation scheme where consecutive unchanged binary chip values would lead to an ever increasing frequency/phase change/deviation, the modulation frequency/phase can be kept closer to an average value. This is of particular importance for wireless power transfer where the power transfer signal is modulated as the modulation may impact the power transfer operation. In particular, frequency variations of the power transfer signal result in variations in the power level being transferred (indeed the power control is typically achieved by adapting the (average) frequency of the power transfer signal). The current approach may provide the advantages of differential demodulation while mitigating, reducing, or removing disadvantages thereof, such as the disadvantage of introducing significant changes in the operating frequency that result in significant power signal disturbances.

The approach may be particularly efficient for implementations where each data symbol is represented by a pattern/predetermined chip sequence of a plurality of modulation levels/chip time intervals. For example, when using a DSSS approach of e.g. more than 4, 6, 8, 10, or 16 modulation levels/chip time intervals, each chip time interval is typically relatively short in order to achieve a reasonable data rate. Such communication may provide improved detection and typically results in a lower error rate. It may also typically allow a given performance to be achieved with a reduced modulation depth (difference in modulation levels). However, using differential modulation would result in potentially overall large deviations of the power transfer signal.

In many embodiments, each possible binary chip value is linked with one modulation level, such as one absolute frequency for each possible binary chip value. For a binary communication, one frequency may be allocated to a "0" binary chip value and one frequency may be allocated to a "1" binary chip value.

However, in some embodiments, a plurality of modulation levels may be linked to a single possible binary chip value. For example, a "1" may be represented by any of the frequencies 99 kHz, 98 kHz, and 97 kHz whereas a "0" may be represented by any of the frequencies 100 kHz, 101 kHz, and 102 kHz.

In such cases an approach may be used by the power transmitter communicator 207 to select between the different modulation levels for a given binary chip value. Specifically, when the binary chip value changes, the new modulation level may be set as that which has the smallest difference to the modulation levels representing the other binary chip value(s). For example, when a binary chip value of "1" follows a binary chip value of "0", the power transmitter communicator 207 may proceed to select the modulation level of 99 kHz (as this is closest to the frequencies that represent a binary chip value of "1"). Similarly, when a binary chip value of "0" follows a binary chip value of "1", the power transmitter communicator 207 may proceed to select the modulation level of 100 kHz (as this is closest to the frequencies that represent a binary chip value of "1").

This modulation level may then be maintained for a number of consecutive chip time intervals that all have the same binary chip value. However, if the number of consecutive chip time intervals that all have the same binary chip value exceeds a given threshold, the modulation level selected to represent that value may be changed to one that is further away from the modulation levels of the other possible binary chip value(s). For example, if more than N (e.g. N=3) consecutive chip time intervals with a binary chip value of "1" are transmitted, the power transmitter communicator 207 may change to represent a "1" by a frequency of 98 kHz rather than by a frequency of 99 kHz. After another M (e.g. M=N=3) consecutive chip time intervals, the power transmitter communicator 207 may select the next modulation level, e.g. the modulation frequency representing "1" may be set to 98 kHz.

Thus, in some embodiments where a plurality of modulation levels is associated with one binary chip value, the power transmitter communicator 207 may change the representation of a binary chip value from one constant modulation level of the plurality of constant modulation levels to another modulation level in response to a detection that more than a given number/threshold of consecutive chip time intervals have the same binary chip value/modulation level. The number/threshold may in many embodiments be an integer number in the range of 2 to 15, and often may be 2, 3, or 4.

Thus, in some embodiments, the power transmitter communicator 207 may adjust the frequency further in the direction of change to increase the measured difference at the power receiver. This may be done if there is a sufficiently long sequence of constant chip values. As a specific example:
- The power transmitter communicator 207 encodes a '0' value by setting the frequency of the power transfer signal to 100kHz, and a '1' value by setting it to 99kHz
- Then when transmitting a sequence of six consecutive ` 1' values, the power transmitter transmits the first three chip values using a frequency of 99kHz, and the last three using a frequency of 98 kHz.

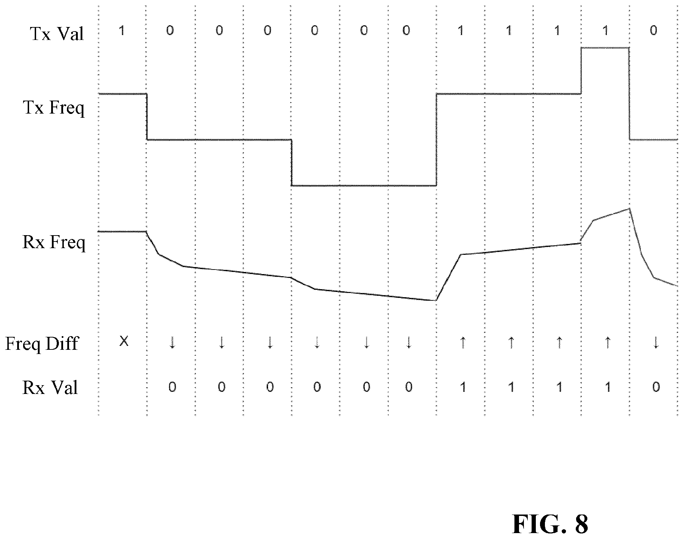

Such an example is illustrated in FIG. 8.

The approach may ensure that the frequency measured at the power receiver continues to transition/change in the desired direction thereby ensuring that the differential demodulation is still valid and preventing that the measured frequency reaches a steady state.

In some embodiments, the power transmitter communicator 207 is arranged to include an initial binary chip value/constant modulation level before the chip time interval(s) providing the pattern/predetermined chip sequence of the data symbol. The applied modulation scheme may include a start time interval that precede the chip time intervals representing the predetermined chip sequence for the data symbol.

In this case, the power receiver communicator 509 may provide the same approach to demodulate the first chip time interval of the predetermined chip sequence, i.e. it may determine the difference in the frequency/phase between the first chip time interval and that of the start time interval.

The power transmitter communicator 207 can in such cases constrain the constant modulation level that is applied in the start time interval to be different than that of the first chip time interval, and indeed such that the modulation level change/difference from the start time interval to the first chip time interval has the same sign/is in the same direction as that from another binary chip value to the binary chip value of the first chip time interval. Specifically, if the binary chip value of the first chip time interval is a "1", the constant modulation level of the start time interval may be set to be the same as for a "0" value (or indeed another modulation that results in the change being in the same direction). For example, if a value of "1" is represented by a frequency of 99 kHz and the value of "0" is represented by a frequency of 100 kHz, then the frequency of the start time interval will be set to be higher than 99kHz, and specifically it may be set to 100kHz (when the first binary chip value of the pattern/predetermined chip sequence is a "1").

Thus, using FSK, the frequency of the start time interval may be set such that the frequency difference between the frequency of the start time interval and the first chip time interval is the same as between the frequency of the opposite binary chip value of that of the first chip time interval and the frequency of the value of the first chip time interval.

In some embodiments, the modulation level during the start time interval may as mentioned be set to be the same value as the modulation level of another binary chip value than the binary chip value of the first chip time interval. However, in other embodiments, it may be set to a different level, and specifically may be set to a level which has a larger difference to that of the first chip time interval. E.g. in the above example, rather than setting the frequency of the start time interval to 100 kHz, it may be set to e.g. 102 kHz. Such an approach may result in an increased difference between the start time interval and the first chip time interval(s). This may allow improved detection of the binary chip values for the first chip time interval(s).

In some embodiments, the predetermined chip sequences of constant modulation levels may have a number of consecutive chip time intervals with no change in the modulation levels. Such properties are typically found in sequences with low cross-correlation, such as e.g. Barker sequences and is typically the case when e.g. DSSS is applied.

In some embodiments, the selected predetermined chip sequences are such that the longest sequence of consecutive chip time intervals that have the same binary chip value/constant modulation level are arranged to immediately follow the start time interval. Thus, following the start time interval (also referred to as the starting bit), there follows a sequence of unchanged modulation levels (e.g. frequencies) that are longer (or at least no shorter) than any other sequence of consecutive unchanged modulation levels.

This may provide improved communication in many embodiments. In particular, the inertia to changes in the phase/frequency of the power transfer signal tends to result in a gradient/rate of change which is larger initially and then reduces with time. Accordingly, the frequency difference between two consecutive chip time intervals becomes smaller the longer the sequence of unchanged modulation levels is (i.e. with time since the last change in frequency/phase). This may be compensated by the frequency during the start time interval differentiating to that of the first chip time interval by more than would occur during normal communication. As a result, significant differences can be maintained for longer and therefore improved communication for longer sequences of unchanged modulation levels can be achieved.

Indeed, a significant issue when using the described differential DSSS communication approach is that of how to handle a prolonged sequence of constant chips. As described previously, the power transmitter communicator 207 may change the modulation frequency further in the transition direction when more than a given number of constant symbols are detected in order to increase the measured difference. However, this might not always be practical, as it increases the frequency variation which could cause power signal fluctuations.

Another issue is the detection of the first binary chip value in a chip sequence. The power transmitter communicator 207 applies DSSS modulation in a non-differential mode, but due to the differential demodulation it is desired that the very first symbol in the chip sequence is one that causes a frequency difference when measured by the power receiver communicator 509.

To provide robust pseudo-differential DSSS communication, the power transmitter may be arranged to always apply an additional start chip at the beginning of the sequence with a modulation direction opposite to the first symbol in the sequence. Thus, a starting chip value in a start time interval may be implemented. The amplitude of such a chip can differ from the sequence modulation depth and in particular can be selected to result in a larger difference.

In many practical implementations, the chip sequence contains a number of consecutive identical chips equal to the sequence order (e.g. a 4th order sequence may include four consecutive ` 1' or `0', depending on orientation) only once with other constant parts of the sequences having lengths below the order of the sequence. In such cases, it may be advantageous for the power transmitter to begin the transmission with the longest sequence of identical chips.

In many embodiments, the communication may be performed in repeated communication time intervals separated by time intervals during which there is no transmission of data from the power transmitter to the power receiver. These intervals in which no transmission of data is performed from the power transmitter will also be referred to as non-communication time intervals.

In some embodiments, the duration of the communication time intervals may be shorter, and often much shorter, than the duration of the non-communication time intervals. For example, in many embodiments, the duration of the non-communication time intervals may be no less than 2, 3, 5, 10, or 25 times the duration of the communication time intervals.

In many embodiments, the frequency during the non-communication time intervals may be kept substantially constant and e.g. only adapted in response to power control error messages. It may specifically set to be identical to one of the modulation frequencies.

However, in some embodiments, the power transmitter communicator 207 may be arranged to apply a frequency variation to the power transfer signal during the non-communication time intervals. The frequency variation may typically be a predetermined/fixed frequency variation that is e.g. not dependent on the power transfer operation and/or on data received from the power receiver. Further, the frequency variation is determined such that it has a low correlation with the frequency pattern/predetermined chip sequences assigned to represent the different data symbols when these are being transmitted. In particular, in many embodiments, the frequency variation may have a correlation with each frequency pattern/predetermined chip sequence of the different pattern/predetermined chip sequences that are assigned to data symbols which is lower than the correlation between each of these pattern/predetermined chip sequences and any constant frequencies. In some cases, it may be less by a factor of 2, 4, 6, 10 or 20 times.

The frequency variation may typically be arranged to have an average which is close to an average of the constant modulation frequencies. For example, binary chip values may be equally likely and represented by frequencies f1 (e.g. equal to 100 kHz) and f2 ((e.g. equal to 99 kHz). In such a case, the frequency variation may be arranged to have an average frequency of (f1 + f2)/2. As a specific example, the frequency variation may include switching between the constant modulation frequencies in accordance with the probabilities of them being used during communication, e.g. typically the binary chip values are equally likely and thus the frequencies during the non-communication time intervals may e.g. alternate between the modulation frequencies.

In many embodiments, the duration between frequency changes may be relatively low. For example, in many embodiments, the duration between frequency changes may be the same as the durations of the chip time intervals. In some cases, an interval between frequency changes may be no less than 1/10^{th} (or 1/5^{th}) of the duration of a chip time interval and/or no more than 2, 5, or 10 times the duration of a chip time interval.

In some embodiments, during non-communication time intervals when no communication is performed, the power transmitter may proceed to not constantly set the frequency of the power transfer signal to a given constant value corresponding to one of the modulation frequencies but rather may be arranged to vary/dither the frequency e.g., by switching between different modulation frequencies. This may e.g., provide an average frequency which is more consistent with the one that is experienced during the communication. Further, the dithering may be performed during the non-communication time intervals may be so that the risk of the power receiver communicator 509 e.g., detecting a variation to correspond to a data symbol value is small.

The inventors have realized that in many approaches using a FSK modulation scheme it is advantageous for the power transmitter to apply frequency dithering while not communicating. This may improve power signal stability (and as a consequence, also load power stability) and detectability on the power receiver side when communicating. Frequency dithering may include that at suitable time intervals (such as for each (e.g. 100Hz-120Hz) power cycle, the power transmitter may switch the power transfer signal frequency between f1 and f2, which may create a repetitive ... 0-1-0-1-0... pattern at the demodulator, making the cross-correlation pattern at the demodulator fluctuate around the middle value. Thus, the approach may allow the demodulator of the power receiver communicator 509 to operate continuously without risking that the frequency dithering is detected as genuine communicated data.

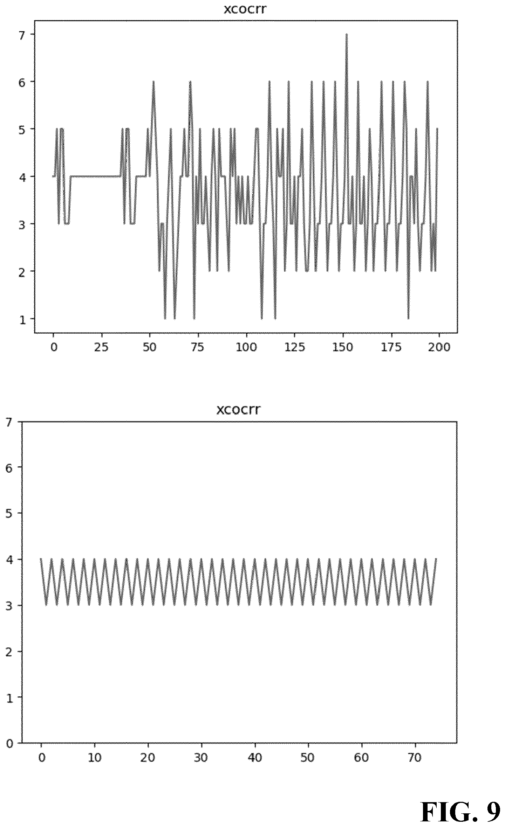

FIG. 9 illustrates an example of a result of applying frequency dithering while not communicating. The figures show the cross-correlation between an unmodulated carrier and a modulation pattern/predetermined chip sequence of a 7-th order Barker code as well as the cross-correlation between a frequency-dithered carrier and the same 7-th order Barker code. As can be seen, a substantially reduced/more constant correlation value may often be achieved. The approach in particular provides that desired frequency differences between consecutive measurements are well controlled rather than random fluctuations due to noise. Indeed, without an absolute reference, the differential reference obtained from the power signal is dependent on minimal fluctuations. This may substantially increase the risk of false detections due to the increased probability of high correlations with the stored patterns/predetermined chip sequences. However, such misdetections may be substantially reduced by introducing an intentional frequency dithering.

Another advantage of a frequency-dithered carrier is the lower fluctuation of the power signal between periods of communication and no communication is achieved as a matching operation (e.g. the same average frequency) can be achieved.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

(Binary) chip value(s) may also be referred to as data value(s). Predetermined chip sequences (of one or more binary chip values) may also be referred to as patterns (of one or more data or chip values). Chip time interval(s) may also be referred to as modulation time interval(s). Such replacements may be made throughout the text including the claims. As such, the described approaches may also support the following descriptions/definitions of embodiments:

### EMBODIMENTS:

Embodiment 1. A power receiver (105) for wirelessly receiving power from a power transmitter (101) via an electromagnetic power transfer signal, the power receiver (105) comprising:
   an input circuit (107, 501) comprising a receiver coil (107) arranged to extract power from the power transfer signal to generate an induced power signal;
   a power receiver controller (501) arranged to control an operation of the power receiver (105) in dependence on data received from the power transmitter (101);
   a communicator (509) arranged to receive data from the power transmitter (101) modulated on to the power transfer signal using a modulation scheme where each data symbol value is represented by a different pattern of at least one data value, each data value being represented by a constant modulation level in a modulation time interval, each constant modulation level being at least one of a constant frequency and a constant phase of the power transfer signal during the modulation time interval, the constant modulation levels being unchanged between some consecutive modulation time intervals;
   wherein the communicator (509) is arranged to:
      for each modulation time interval of at least some modulation time intervals determine a difference between a measured modulation level for the each modulation time interval and a previously measured modulation level, the previously measured modulation level being a modulation level measured for a modulation time interval immediately preceding the each modulation time interval, and to determine a received data value for the each modulation time interval depending on the difference; and
      determine data symbol values by comparing received patterns formed by received data values to the different patterns.
Embodiment 2. The power receiver of embodiment 1 wherein the different patterns comprise only one modulation time interval.
Embodiment 3. The power receiver of embodiment 1 wherein the different patterns comprise no less than four modulation time intervals.
Embodiment 4. The power receiver of any previous embodiment wherein the modulation scheme includes a start time interval preceding modulation time intervals for a pattern for a data symbol; and wherein the communicator (509) is arranged to determine the previously measured modulation level for an initial modulation time interval of the pattern for the data symbol as a modulation level measured for the start time interval.
Embodiment 5. The power receiver of embodiment 4 wherein a constant modulation level for the start time interval is constrained to have a different value than a constant modulation level for the initial modulation time interval.
Embodiment 6. The power receiver of embodiment 4 or 5 wherein the different patterns are arranged to have a longest sequence of consecutive modulation time intervals with the same data value to immediately follow the start time interval.
Embodiment 7. The power receiver of any previous embodiment wherein the modulation scheme includes a plurality of constant modulation levels being linked to at least a first data value and wherein the first data value is changed from being represented by a first constant modulation level of the plurality of constant modulation levels to being represented by a second constant modulation level of the plurality of constant modulation levels in response to a number of consecutive modulation time intervals having the first constant modulation level exceeding a threshold.
Embodiment 8. The power receiver of embodiment 7 wherein a difference between the first constant modulation level and a constant modulation level linked with a different data value than the first data value is smaller than a difference between the second constant modulation level and the constant modulation level linked with the different data value.
Embodiment 9. The power receiver of any previous embodiment wherein the data values of the different patterns are binary data values.
Embodiment 10. A power transfer system comprising a power transmitter (101) providing power to the power receiver (105) of any previous embodiment, the power transmitter (101) comprising:
   an output circuit (203, 103) comprising a transmitter coil (103) arranged to generate the power transfer signal in response to a drive signal being applied to the output circuit (203, 103);
   a driver (201) arranged to generate the drive signal;
   a first communicator (207) arranged to transmit data to the power receiver (105) by modulating the power transfer signal using the modulation scheme where each data symbol value is represented by a different pattern of at least one data value, each data value being represented by a constant modulation level in a modulation time interval, each constant modulation level being at least one of a constant frequency and a constant phase of the power transfer signal during the modulation time interval, the constant modulation levels being unchanged between some consecutive modulation time intervals.
Embodiment 11. The power transfer system of embodiment 10 wherein each constant modulation level is a constant frequency, and the first communicator (207) is arranged to transmit data to the power receiver (105) during communication time intervals, and to apply a frequency variation to the power transfer signal during time intervals between the communication time intervals.
Embodiment 12. The power transfer system of embodiment 11 wherein the first communicator (207) is arranged to apply a frequency variation having a correlation with each frequency pattern of the different patterns which is less than a correlation between any constant frequency and each frequency pattern of the different patterns.
Embodiment 13. A method of operation for a power receiver (105) wirelessly receiving power from a power transmitter (101) via an electromagnetic power transfer signal, the power receiver comprising:
   an input circuit (107, 501) comprising a receiver coil (107) extracting power from the power transfer signal to generate an induced power signal;
   a power receiver controller (501) arranged to control an operation of the power receiver (105) in dependence on data received from the power transmitter (101);
      a communicator (509) arranged to receive data from the power transmitter (101) modulated on to the power transfer signal using a modulation scheme where each data symbol value is represented by a different pattern of at least one data value, each data value being represented by a constant modulation level in a modulation time interval, each constant modulation level being at least one of a constant frequency and a constant phase of the power transfer signal during the modulation time interval, the constant modulation levels being unchanged between some consecutive modulation time intervals;
   wherein the method comprises the communicator (509) performing the steps of:
      for each modulation time interval of at least some modulation time intervals determining a difference between a measured modulation level for the each modulation time interval and a previously measured modulation level, the previously measured modulation level being a modulation level measured for a modulation time interval immediately preceding the each modulation time interval, and determining a received data value for the each modulation time interval depending on the difference; and
      determining data symbol values by comparing received patterns formed by received data values to the different patterns.

## Claims

1. A power receiver (105) for wirelessly receiving power from a power transmitter (101) via an electromagnetic power transfer signal, the power receiver (105) comprising:
an input circuit (107, 501) comprising a receiver coil (107) arranged to extract power from the power transfer signal to generate an induced power signal;
a power receiver controller (501) arranged to control an operation of the power receiver (105) in dependence on data received from the power transmitter (101);
a communicator (509) arranged to receive data symbols transmitted from the power transmitter (101), each data symbol having a data symbol value and being modulated on to the power transfer signal using a modulation scheme where each data symbol value is linked to a different predetermined chip sequence of one or more binary chip values, each binary chip value being represented by a constant modulation level in a chip time interval, each constant modulation level being at least one of a constant frequency of the power transfer signal and a constant phase of the power transfer signal, the constant modulation levels being unchanged between some consecutive chip time intervals;
wherein the communicator (509) is arranged to:
for each chip time interval of at least some chip time intervals determine a difference between a measured modulation level for the chip time interval and a measured modulation level for an immediately preceding chip time interval, and to determine a received binary chip value for the chip time interval from the difference; and to
determine data symbol values by comparing received chip sequences formed by received binary chip values to the different predetermined chip sequences.

2. The power receiver of claim 1 wherein the different predetermined chip sequences comprise only one binary chip value.

3. The power receiver of claim 1 wherein the different predetermined chip sequences comprise no less than four binary chip values.

4. The power receiver of any previous claim wherein the modulation scheme includes a start time interval preceding chip time intervals for a predetermined chip sequence for a data symbol; and wherein the communicator (509) is arranged to determine the previously measured modulation level for an initial chip time interval of the predetermined chip sequence for the data symbol as a modulation level measured for the start time interval.

5. The power receiver of claim 4 wherein a constant modulation level for the start time interval is constrained to have a different value than a constant modulation level for the initial chip time interval.

6. The power receiver of claim 4 or 5 wherein the different predetermined chip sequences are arranged to have a longest sequence of consecutive chip time intervals with the same binary chip value to immediately follow the start time interval.

7. The power receiver of any previous claim wherein the modulation scheme includes a plurality of constant modulation levels being linked to at least a first binary chip value and wherein the first binary chip value is changed from being represented by a first constant modulation level of the plurality of constant modulation levels to being represented by a second constant modulation level of the plurality of constant modulation levels in response to a number of consecutive chip time intervals having the first constant modulation level exceeding a threshold.

8. The power receiver of claim 7 wherein a difference between the first constant modulation level and a constant modulation level linked with a different binary chip value than the first binary chip value is smaller than a difference between the second constant modulation level and the constant modulation level linked with the different binary chip value.

9. A power transfer system comprising a power transmitter (101) providing power to the power receiver (105) of any previous claim, the power transmitter (101) comprising:
an output circuit (203, 103) comprising a transmitter coil (103) arranged to generate the power transfer signal in response to a drive signal being applied to the output circuit (203, 103);
a driver (201) arranged to generate the drive signal;
a first communicator (207) arranged to transmit data to the power receiver (105) by modulating the power transfer signal using the modulation scheme where each data symbol value is represented by a different predetermined chip sequence of at least one binary chip value, each binary chip value being represented by a constant modulation level in a chip time interval, each constant modulation level being at least one of a constant frequency and a constant phase of the power transfer signal during the chip time interval, the constant modulation levels being unchanged between some consecutive chip time intervals.

10. The power transfer system of claim 9 wherein each constant modulation level is a constant frequency, and the first communicator (207) is arranged to transmit data to the power receiver (105) during communication time intervals, and to apply a frequency variation to the power transfer signal during time intervals between the communication time intervals.

11. The power transfer system of claim 10 wherein the first communicator (207) is arranged to apply a frequency variation having a correlation with each frequency pattern of the different predetermined chip sequences which is less than a correlation between any constant frequency and each frequency pattern of the different predetermined chip sequences.

12. A method of operation for a power receiver (105) wirelessly receiving power from a power transmitter (101) via an electromagnetic power transfer signal, the power receiver comprising:
an input circuit (107, 501) comprising a receiver coil (107) extracting power from the power transfer signal to generate an induced power signal;
a power receiver controller (501) arranged to control an operation of the power receiver (105) in dependence on data received from the power transmitter (101);
a communicator (509) arranged to receive data symbols transmitted from the power transmitter (101), each data symbol having a data symbol value and being modulated on to the power transfer signal using a modulation scheme where each data symbol value is linked to a different predetermined chip sequence of one or more binary chip values, each binary chip value being represented by a constant modulation level in a chip time interval, each constant modulation level being at least one of a constant frequency of the power transfer signal and a constant phase of the power transfer signal, the constant modulation levels being unchanged between some consecutive chip time intervals;
wherein the method comprises the communicator (509) performing the steps of:
for each chip time interval of at least some chip time intervals determining a difference between a measured modulation level for the chip time interval and a measured modulation level for an immediately preceding chip time interval, and determining a received binary chip value for the chip time interval from the difference; and
determining data symbol values by comparing received chip sequences formed by received binary chip values to the different predetermined chip sequences.
